(19) **Europäisches Patentamt / European Patent Office / Office européen des brevets**

(11) **EP 2 796 893 B1**

(12) **FASCICULE DE BREVET EUROPEEN**

(45) Date de publication et mention
de la délivrance du brevet:
**25.05.2016   Bulletin 2016/21**

(51) Int Cl.:
*G01S 13/90* (2006.01)   *G01S 7/292* (2006.01)

(21) Numéro de dépôt: **14164994.7**

(22) Date de dépôt: **16.04.2014**

(54) **Procédé d'élimination d'échos parasites en imagerie SAR**

Verfahren zum Ausblenden von Störechos bei der SAR-Bildgebung

Method for the elimination of parasitic echoes in SAR imaging

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.04.2013   FR 1300977**

(43) Date de publication de la demande:
**29.10.2014   Bulletin 2014/44**

(73) Titulaire: **Thales
92200 Neuilly Sur Seine (FR)**

(72) Inventeurs:
• **Bon, Nicolas
78851 Elancourt (FR)**
• **Quellec, Jean-Michel
78851 Elancourt (FR)**
• **Marchalot, Gabriel
78851 Elancourt (FR)**

(74) Mandataire: **Priori, Enrico
Marks & Clerk France
Conseils en Propriété Industrielle
Immeuble «Visium»
22, avenue Aristide Briand
94117 Arcueil Cedex (FR)**

(56) Documents cités:
• **HORSTMANN J ET AL: "Global wind speed
retrieval from sar", IEEE TRANSACTIONS ON
GEOSCIENCE AND REMOTE SENSING, IEEE
SERVICE CENTER, PISCATAWAY, NJ, US, vol.
41, no. 10, 1 octobre 2003 (2003-10-01), pages
2277-2286, XP011102420, ISSN: 0196-2892, DOI:
10.1109/TGRS.2003.814658**
• **P. FERRAZZOLI ET AL: "Rain-induced
modification of SAR performance", ADVANCES
IN SPACE RESEARCH, vol. 7, no. 11, 1 janvier
1987 (1987-01-01), pages 269-272, XP055099922,
ISSN: 0273-1177, DOI:
10.1016/0273-1177(87)90323-1**

**Description**

La présente invention concerne le domaine général des radars aéroportés ou spatiaux à synthèse d'ouverture. La présente invention concerne plus particulièrement un procédé d'élimination d'échos parasites sur les images SAR.

Les radars à synthèse d'ouverture (ou SAR pour Synthetic Aperture Radar selon la terminologie anglo-saxonne) sont largement utilisés dans les activités d'analyse à distance des caractéristiques physiques des zones terrestres et maritimes à partir de leur réflectivité radar. Ces activités sont appelées « Radar remote sensing » en anglais. Une des activités dans ce domaine est la détection de nappes d'hydrocarbures sur la mer par différence de niveau de réflectivité radar entre les zones polluées et les zones non polluées.

Des études ont été réalisées pour évaluer la perturbation apportée de la présence de pluie pour cette analyse. C'est le cas par exemple de l'étude "Rain-induced modification of SAR performance" de P. Ferrazzoli et G. Schiavon - Adv Space Res vol 7 N°11 1987. Dans cette étude, les défauts liés à la présence de pluie sont présentés mais l'analyse effectuée ne traite pas le fait que les échos de pluie peuvent avoir un spectre Doppler décalé par rapport au spectre des échos de sol de la zone observée. De plus, cette étude ne propose pas de solution pour réduire la perturbation.

D'autres études traitent de l'impact de la présence d'échos mobiles dans la zone observée par un radar SAR (voir notamment "Principles and applications of imaging radars" - Manual of Remote Sensing - Third Edition - Volume 2) et proposent des solutions pour pouvoir détecter des échos mobiles à partir de traitements SAR. Cependant, ces techniques, qui s'apparentent aux techniques de détection de cibles mouvantes (ou MTI pour Moving Target Indicator selon la terminologie anglo saxonne), ne sont effectives que pour détecter des cibles ayant une vitesse radiale suffisante pour que leur fréquence Doppler sortent du spectre Doppler des échos fixes observés par la technique SAR. Ces techniques ne sont pas applicables dans le cas où le domaine de variation des vitesses radiales relatives des éléments perturbateurs comme les gouttes de pluie ne se dégage pas du domaine des vitesses radiales relatives des éléments de la scène observée qui sont à la même position géographique.

Des techniques d'amélioration de la texture des images de scènes SAR maritimes, rurales ou forestière ont également été décrites notamment dans l'ouvrage « Principles and applications of imaging radars » précédemment cité. Ces méthodes sont appliquées sur des images SAR déjà construites. Elles s'appuient sur la construction du spectre 2D de l'image SAR et sur l'élimination d'une partie du spectre qui correspond au speckle, pour ne conserver que les éléments ayant une texture particulière comme le motif de vagues. Ces méthodes ne sont applicables que quand l'image attendue a une texture particulière. Ce n'est pas le cas par exemple, lorsque l'on observe d'une mer belle à peu agitée, à faible angle de rasance en polarisation horizontale.

Enfin, dans les situations où le phénomène d'intérêt ne conduit pas à des images ayant une texture particulière, des méthodes de segmentation peuvent être utilisées. Ces méthodes sont basées sur l'identification de lois de densités de probabilités différentes sur le fond de l'image et sur la zone recherchée.

Cette segmentation peut aussi être complémentée par des opérations dites de "morphologie mathématique" permettant de lisser l'image résultant de la segmentation en partant de l'hypothèse que les zones recherchées ont une étendue de plusieurs pixels de l'image.

Il est également connu de l'art antérieur, notamment par la publication de HORSTMANN J ET AL: "Global wind speed retrieval from sar", IEEE TRANSACTIONS ON GEOSCIENCE AND REMOTE SENSING, vol. 41, no. 10, 1 octobre 2003, pages 2277-2286, une méthode d'estimation du vent à partir d'imagettes SAR.

Un inconvénient de ces solutions est qu'elles sont appliquées une fois que l'image SAR est créée et que le phénomène parasite a contribué à l'augmentation de tous les niveaux des pixels correspondant à des zones de faible réflectivité que l'on cherche à identifier sur la carte et donc à réduire le contraste entre les zones de faible réflectivité et les zones de plus faible réflectivité.

Un but de l'invention est notamment de corriger tout ou partie des inconvénients précités en proposant un procédé de traitement d'imagerie SAR permettant d'atténuer les effets d'échos parasites.

A cet effet, l'invention a pour objet un procédé d'élimination d'échos parasites en imagerie SAR mis en oeuvre par au moins un porteur mobile comprenant :

- une étape de définition des paramètres d'imagerie SAR à partir d'au moins la vitesse du porteur et la distance de la zone à imager par rapport au porteur,
- une étape de calcul du spectre du signal reçu, dans chaque case distance, d'une zone d'intérêt,
- une étape de filtrage des spectres dans chaque case distance réalisée par un filtre passe bande centré sur la fréquence centrale $f_{D0}$ des échos fixes rétrodiffusés par la zone d'intérêt, ladite fréquence centrale $f_{D0}$ étant obtenu par corrélation du spectre mesuré avec la forme théorique du spectre obtenue à partir des caractéristiques du diagramme de l'antenne radar,
- une étape de formation d'imagette SAR et
- une étape de concaténation des imagettes SAR pour former l'image SAR finale.

Selon un mode de mise en oeuvre, en cas de recouvrement de pixels lors de l'étape de concaténation, cette dernière comprend une étape de moyennage de la valeur des pixels de chaque point de l'image SAR finale recouvert par plusieurs imagettes.

De façon avantageuse, la présente invention permet d'améliorer le contraste sur les images SAR en réduisant le niveau des parasites dus à des échos radar naturels, par exemple liés aux particules de pluie ou de déferlement de vagues, qui ont un spectre de vitesse en général plus large que celui des phénomènes ou objets observés qui sont statiques ou faiblement mobiles.

D'autres particularités et avantages de la présente invention apparaîtront plus clairement à la lecture de la description ci-après, donnée à titre illustratif et non limitatif, et faite en référence aux dessins annexés, dans lesquels :

- La figure 1 représente un exemple de plateforme effectuant une imagerie de type SAR d'une cible ;

- La figure 2 est un exemple de représentation graphique de l'amplitude d'un spectre de signal reçu par un radar de type SAR ;

- La figure 3 est un exemple de représentation graphique de l'amplitude d'un spectre Doppler dans le cas où la rétrodiffusion n'est pas uniforme ;

- Les figures 4a et 4b sont des exemples de représentation graphique de l'amplitude de spectres Doppler parasités;

- La figure 5 illustre le principe de l'invention ;

- La figure 6 représente un organigramme de principe du procédé selon l'invention ;

- La figure 7 illustre la variation d'azimuth d'un point placé à une certaine distance d'une plateforme lorsque cette plateforme se déplace ;

- Les figures 8a et 8b sont respectivement des exemples de représentation graphique de l'amplitude d'un spectre "normal" et de celle d'un spectre « pollué ».

Le procédé selon l'invention peut être mise en oeuvre par exemple, par des porteurs mobiles de type aéronefs ou satellite embarquant un dispositif de type radar à synthèse d'ouverture (ou SAR) pour la surveillance d'une zone d'intérêt.

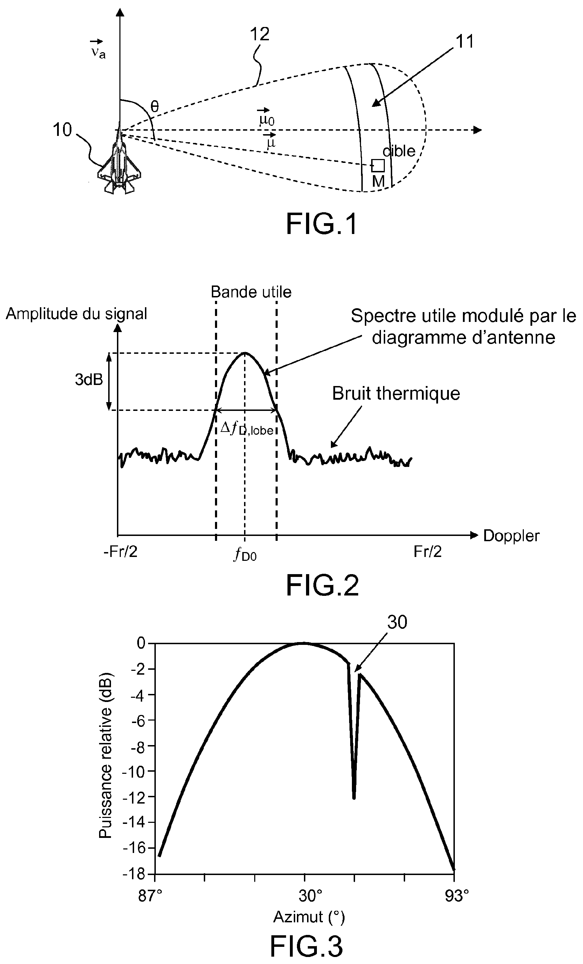

La cartographie radar à haute résolution à partir de plateformes 10 aéroportées ou spatiales est réalisée en général par la technique d'imagerie SAR. En référence à la figure 1, le principe de la cartographie SAR est rappelé brièvement. Elle est adaptée à la cartographie de points fixes. L'imagerie radar SAR utilise la fréquence Doppler des cibles pour les séparer angulairement.

Si on considère une cible mobile M illuminée par le lobe d'antenne d'un radar à synthèse d'ouverture, cette cible a une fréquence Doppler $f_D$ qui dépend de son angle $\theta$ par rapport au vecteur vitesse $\vec{v}_a$ de la plateforme 10 telle que :

$$f_D = \frac{2\vec{v}_a.\vec{u}(\theta)}{\lambda} \quad \text{(Equation 1)}$$

Pour une plateforme 10 ayant un vecteur vitesse Va horizontal et une visée rasante, on peut simplifier l'équation précédente qui devient :

$$f_D = \frac{2.va}{\lambda}.\cos\theta. \quad \text{(Equation 1 bis )}$$

ou

$$f_D = \frac{2.va}{\lambda}.\sin\alpha. \text{ (avec } \alpha = \pi/2 - \theta) \quad \text{(Equation 1 ter)}$$

Où :

$\lambda$ représente la longueur d'onde du radar
et $\overleftarrow{u}$ le vecteur unitaire en direction de la cible M.

Ainsi, la zone éclairée par le lobe d'antenne, $\Delta f_{D,lobe}$, a une étendue Doppler qui est directement reliée à l'ouverture à -3dB du lobe d'antenne $\Delta\theta 3db$ :

$$\Delta f_{D,lobe} = \frac{2\vec{v}_a.\vec{u}'(\theta)}{\lambda}\Delta\theta 3db$$

ou plus simplement :

$$\Delta f_{D,lobe} = \frac{2v_a}{\lambda}\sin\theta\Delta\theta 3db \quad \text{(Equation 2)}$$

Le spectre utile à la formation de l'image SAR est ainsi compris dans la bande utile $\Delta f_{D,lobe}$. Sa fréquence centrale correspond à la fréquence Doppler au centre du lobe d'antenne :

$$f_{D0} = \frac{2\vec{v}_a.\vec{u}_0(\theta)}{\lambda} \quad \text{(Equation 3)}$$

Il est à noter qu'en pratique, la fréquence Doppler $f_{D0}$ n'est pas connue avec une grande précision à cause des différentes erreurs sur la valeur et la direction du vecteur Va, et sur la direction de l'antenne, du fait notamment des erreurs d'harmonisation.
La résolution Doppler $\delta fd$ peut être obtenue en dérivant l'équation 1.

$$\delta fd = 1/Ti = \frac{2.va}{\lambda}.\sin\theta.\delta\theta \quad \text{(Equation 4)}$$

Où Ti représente le temps d'intégration cohérente
La résolution transverse $\delta rt$ peut être donnée par la formule :

$$\delta rt = D.\delta\theta = \frac{\lambda.D}{2.va.\sin\theta.Ti} \quad \text{(Equations 5)}$$

Où D représente la distance de la zone à imager
Dans le cas où la cible M est mobile, comme par exemple dans le cas de gouttes de pluie se déplaçant sous l'effet du vent ou celui d'un mouton à la surface de la mer, l'équation (1 bis) devient :

$$f_D = \frac{2.va}{\lambda}.\cos\theta. + \frac{2.Vr}{\lambda} \quad \text{(Equation 6)}$$

Où Vr représente la vitesse radiale de l'objet.
La figure 2 donne un exemple de représentation spectrale de l'allure de l'amplitude du signal reçu par un radar à synthèse d'ouverture, des différents points fixes localisés dans sa cellule de résolution. Cette représentation correspond à un cas simplifié où le coefficient de rétrodiffusion radar est constant.
Nous avons vu précédemment que pour un axe cible-plateforme sensiblement perpendiculaire à la trajectoire de la plateforme 10, ce qui correspond à une valeur de l'angle $\alpha$ proche de zéro, il existait une relation entre la fréquence Doppler et l'angle $\alpha$ (cf. équation 1ter). Dans le cas d'un coefficient de rétrodiffusion uniforme, l'allure du centre du spectre du signal reçu de la cellule de résolution correspond à la forme du lobe principal de l'antenne au carré car les signaux reçus de la cellule de résolution radar sont plus ou moins forts selon leur dépointage dans le lobe.

Afin de former l'image SAR, après le calcul du spectre du signal reçu dans chaque case distance un filtrage est effectué pour ne conserver que la bande utile de ce spectre. Classiquement cette bande utile correspond à la bande de fréquence pour laquelle l'amplitude du signal est supérieure à l'amplitude maximale moins trois décibels. Un problème est que dans cette bande utile il peut exister un ou plusieurs spectres parasites.

A titre d'exemple, la figure 3 représente l'amplitude d'un spectre Doppler dans le cas où la rétrodiffusion dans la cellule de résolution (11) n'est pas uniforme mais présente une valeur plus faible pour un azimut donné. Cette atténuation (30) peut, par exemple, être due à la présence d'une nappe de pétrole, d'hydrométéores ou de speckle. Dans le cas représenté, la rétrodiffusion présente une atténuation (30) ponctuelle de 10 dB de la réflectivité de la mer pour un azimut de 91°. Cette échelle d'abscisse comprise entre 87° et 93° correspond à une variation de fréquence Doppler de -350 Hz à +350 Hz.

En présence d'hydrométéores et/ou de vagues déferlantes, lorsqu'une plateforme 10 aéroportée ou spatiale effectue une imagerie SAR, plusieurs objets de vitesses radiales Vr différentes peuvent être présents dans la cellule de résolution (11) du radar. Les valeurs de Vr sont en général dispersées autour d'une vitesse radiale $Vr_0$ (Vitesse radiale moyenne) avec une certaine largeur $\Delta Vr$.

De manière schématique, Le spectre Doppler dans la cellule (11) est constitué de la somme du spectre des échos supposés fixes, comme par exemple surface de la mer dans le cas d'une imagerie maritime ou le sol dans un cas terrestre, et des échos mobiles dus par exemple à la pluie et/ou au déferlement des vagues.

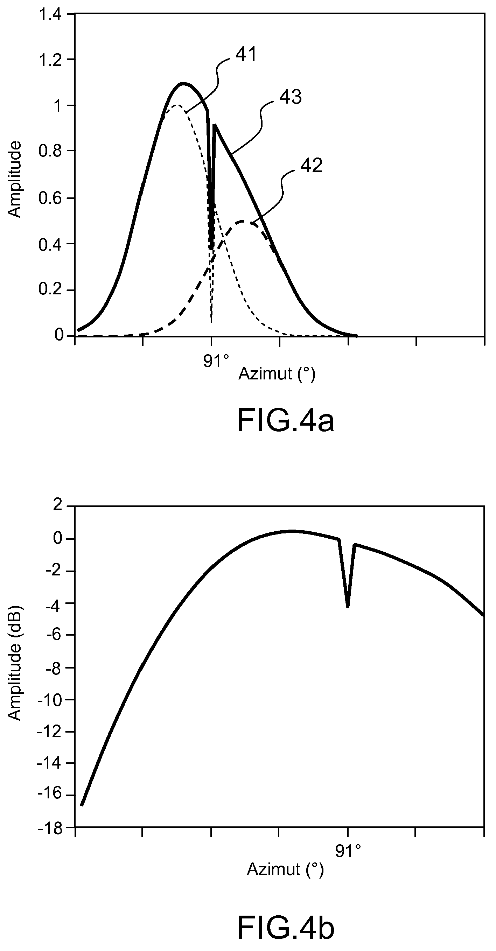

A titre illustratif, la figure 4a représente, suivant une échelle linéaire, l'amplitude en fonction de l'azimut, d'un exemple de spectre d'une mer présentant une nappe de pétrole 41, d'un exemple de spectre d'échos de pluie 42 ainsi que le spectre résultant de la somme des deux spectres précédents. On peut noter que la puissance des échos de pluie correspond à une puissance de 3dB sous la puissance des échos fixes.

La figure 4b représente l'amplitude du spectre résultant de la somme des échos de pluie et des échos de mer présentant une nappe de pétrole, en fonction de l'azimut, avec une échelle logarithmique. Par rapport au cas de la figure 3, on peut noter que pour la partie atténuée, le contraste entre la case spectrale atténuée et les cases spectrales voisines n'est plus que de 3dB au lieu de 10 dB précédemment.

Afin de réduire la contribution du spectre parasite, l'invention consiste à réduire la taille de la bande utile pour ne conserver qu'une bande de fréquences minimale $\Delta f$ du spectre pour former l'image SAR. Cette réduction de la bande de fréquence peut être assimilée à un filtrage fréquentiel.

Une conséquence de ce filtrage est une réduction de la zone image au sol sur l'axe transverse. De façon à combler cette perte d'information dans l'image SAR due au filtrage, le procédé selon l'invention va consister à fractionner le temps d'éclairement de la zone à imager et à former plusieurs sous-images SAR ou imagettes SAR 51 qui seront ensuite juxtaposées afin de former l'image SAR finale.

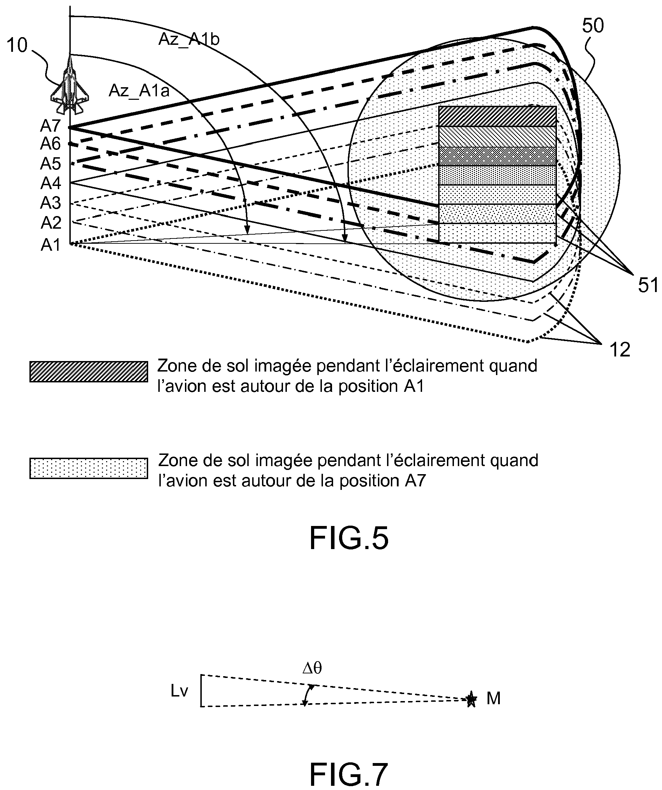

La figure 5 illustre le principe de fractionnement du temps d'éclairement et du traitement en sous images.

Cette figure présente une vue schématique d'un exemple de plateforme 10 effectuant une imagerie SAR d'une zone d'intérêt 50. On suppose que la plateforme 10 se déplace à vitesse et route constante pour passer successivement des positions A1 à A7. L'antenne du radar à synthèse d'ouverture est pointée à environ 90° de la route empruntée par la plateforme 10. Des analyses Doppler sont réalisées à partir de la réception de $N_{rec}$ impulsions radar quand la plateforme se déplace sur un segment de droite centré sur la position A1 ou A2, ..., ou A7 pour former une imagette SAR 51.

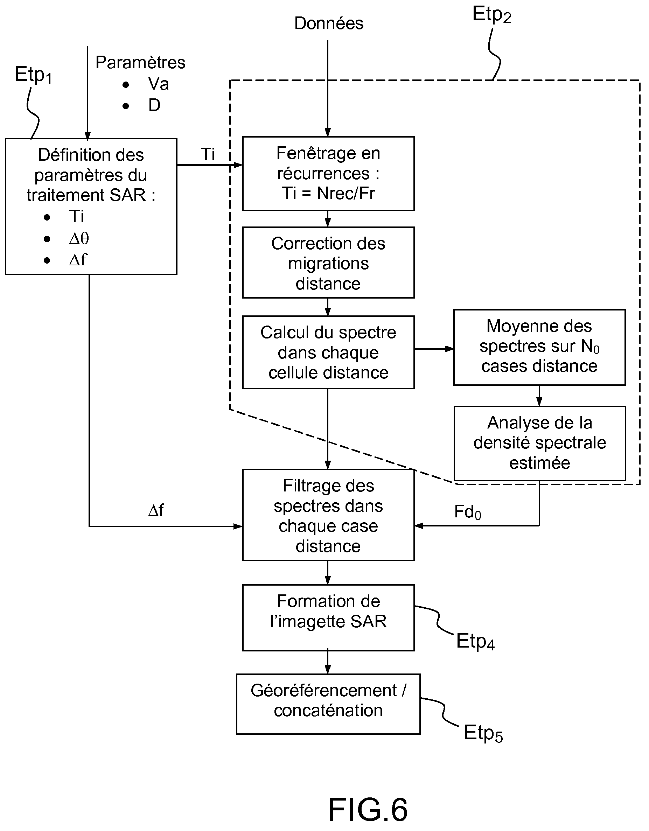

La figure 6 représente un organigramme d'étapes possible du procédé selon l'invention. Ce procédé comporte principalement une étape Etp1 de définition des paramètres d'imagerie SAR, une étape Etp2 de calcul du spectre du signal reçu dans chaque case distance, une étape Etp3 de filtrage des spectres dans chaque case distance, une étape Etp4 de formation d'imagette SAR 51 et une étape Etp5 de concaténation des imagettes 51 pour former l'image SAR finale.

On suppose que la forme d'onde émise par le radar à synthèse d'ouverture a été choisie de façon à obtenir la résolution souhaitée sur l'axe radial et à limiter les ambigüités en distance radiale et en distance transverse.

A partir de paramètres d'entrée comme par exemple la vitesse Va du porteur, la distance D de la zone à imager par rapport à la plateforme 10, les paramètres de traitement SAR vont être définis de façon automatique.

L'élément d'entrée principal pour définir le traitement SAR sur l'axe transverse est la résolution $\delta_{rt}$ sur cet axe. Suivant l'application radar souhaitée, cette résolution pourra être choisie plus ou moins fine. Le choix de cette résolution conduit à la valeur du temps d'intégration cohérente $T_i$ en utilisant par exemple l'équation 5 citées précédemment.

Pendant ce temps $T_i$, la plateforme 10 évoluant à une vitesse Va, se déplace d'une distance Lv égale à :

$$Lv = Va.T_i \quad \text{(Equation 7)}$$

En référence à la figure 7, si on considère un point M situé à une distance D de la plateforme et à environ 90° de la route de la plateforme, l'azimut de ce point M au milieu de l'intervalle de durée $T_i$ va varier d'une valeur égale à :

$$\Delta\theta = \frac{Va.Ti}{D} \quad \text{(Equation 8)}$$

En utilisant les équations 5, avec une valeur de $\theta$ d'environ 90° on obtient:

$$\Delta\theta = \frac{\lambda}{2*D*\delta\theta} = \frac{\lambda}{2.\delta rt} \quad \text{(Equation 9)}$$

Ainsi, une portion $\Delta f$ du spectre Doppler, centrée autour de la fréquence centrale $f_{D0}$, est suffisante pour réaliser l'image du point M. Cette étendue Doppler $\Delta f$ peut être obtenue en dérivant l'équation (1 bis) :

$$\Delta f = \frac{2.Va}{\lambda}.\sin\theta.\Delta\theta \quad \text{(Equation 10)}$$

Ainsi, pour un angle $\theta$ voisin de 90° on obtient:

$$\Delta f = \frac{2.Va}{\lambda}.\Delta\theta \quad \text{(Equation 11)}$$

Ce qui, en utilisant les équations 5, avec une valeur de $\theta$ voisine de 90°, et l'équation 9, conduit à :

$$\Delta f = \frac{Va}{D*\delta\theta} = \frac{Va}{\delta rt} \quad \text{(Equation 12)}$$

Les valeurs de l'étendue Doppler $\Delta f$ et de la largeur azimutale à traiter dans le lobe antenne $\Delta\theta$ correspondent aux valeurs minimales permettant de générer l'image d'un point M unique sur l'axe transverse.

Dans la technique générale d'imagerie SAR, il est préférable de réaliser, non pas l'image d'un seul point M, mais de l'ensemble des points étendus en transverse autour du point M. Cela permet de générer une image d'une zone d'étendue transverse égale au déplacement du porteur et ainsi d'assurer la formation d'image au fur et à mesure de l'avancement dudit porteur.

Par ailleurs, s'il est nécessaire de réaliser un traitement multi vues en azimut de manière à améliorer la résolution radiométrique, les largeurs azimutales $\Delta\theta$ et les étendues spectrales $\Delta\theta$ associées peuvent être multipliées par un facteur Nv correspondant au nombre de vues.

Il faut également noter que les paramètres des équations définissant les paramètres SAR dépendent de la distance D entre le radar et la cible et qu'il est souvent nécessaire de partager la zone à imager en plusieurs "fauchées" en distance.

Pendant la durée où l'avion se déplace sur une longueur de segment telle que définie précédemment, le traitement réalise une analyse spectrale dans chaque case distance correspondant à la fauchée. Cette analyse est réalisée au cours d'une étape Etp2, de façon classique par les méthodes connues de l'homme du métier. De façon connue, une correction des migrations distance est effectuée de façon à tenir compte du fait que la distance parcourue par les échos radar évolue au cour du déplacement de la plateforme 10.

La densité spectrale mesurée est ensuite estimée en effectuant une moyenne des spectres sur un nombre prédéterminé N de cases distance. Il s'ensuit une opération de traitement du signal destinée à définir si la densité spectrale calculée est "normale" ou polluée par des phénomènes parasites par exemple d'origine météorologiques. Pour cela, cette opération prend en compte la densité spectrale théorique attendue définie en fonction des caractéristiques du diagramme antenne et la compare avec la densité spectrale mesurée.

La définition précise du caractère « normale » ou non de cette opération dépend de l'application et de l'ampleur des perturbations tolérées. Elle consiste à définir si la densité spectrale diffère trop de l'attendue.

Le traitement estime ensuite la fréquence centrale $f_{D0}$ du spectre des échos fixes. Pour cela, l'invention propose une méthode adaptative suivant si le spectre mesuré est considéré comme pollué ou non par des échos parasites.

Si la densité spectrale est considérée comme "normale", la valeur retenue pour la fréquence centrale $f_{D0}$ est obtenue en décalant la densité spectrale attendue sur l'axe des abscisses (axe des fréquences Doppler), de manière à ce que la corrélation entre les densités spectrales mesurée et attendue soit maximale. La fréquence centrale $f_{D0}$ correspond à la fréquence pour laquelle la densité spectrale théorique attendue est maximale.

Lorsque la densité spectrale mesurée est considérée comme polluée elle est étalée sur une bande de fréquence beaucoup plus large que dans le cas "non pollué". Ce phénomène provient du fait que le spectre des échos utiles, comme par exemple ceux du sol ou de la mer, est séparé fréquentiellement des spectres parasites parce que ces parasites ont une vitesse propre qui fait que leur fréquence Doppler est plus importante.

La localisation du centre $f_{D0}$ du spectre utile des échos fixes rétrodiffusés par la zone d'intérêt 50, va être effectuée par corrélation avec la forme du spectre théorique obtenue à partir des caractéristiques du diagramme de l'antenne radar. La méthode va consister à rechercher le coté où la pente est la plus raide sur la courbe du spectre mesuré. Ce coté correspond à la bande de fréquences pour laquelle la densité du spectre mesuré est peu perturbée par les effets parasites. La densité spectrale théorique attendue est ensuite décalée sur l'axe des abscisses (axe des fréquences Doppler), de manière à ce que la corrélation entre les densités attendue et mesurée soit maximale sur le côté de la courbe de spectre mesuré ayant la pente la plus raide. La fréquence centrale $f_{D0}$ est ensuite déterminée en recherchant la fréquence pour laquelle l'allure du spectre théorique est maximum.

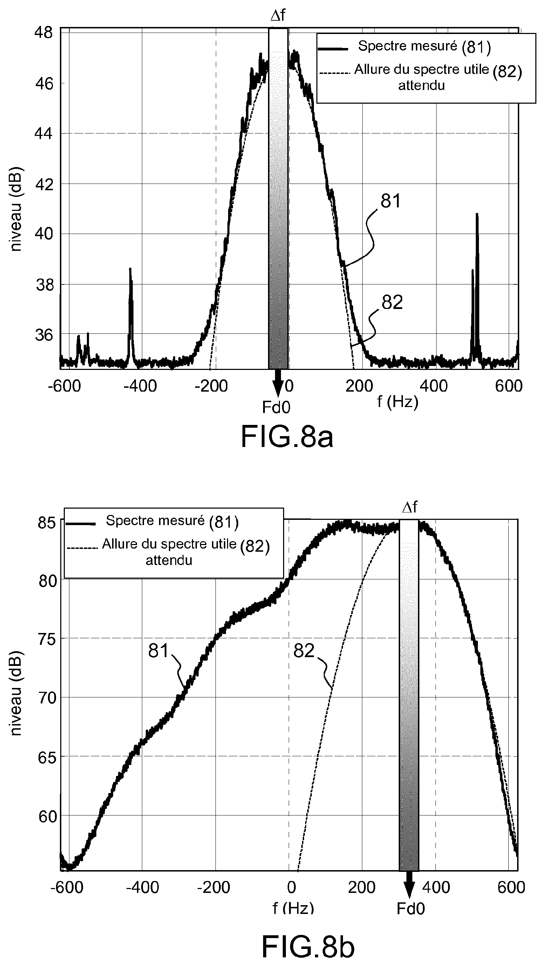

A titre illustratif les figures 8a et 8b présentent des exemples de représentation graphique de l'amplitude d'un spectre "normal" et de celle d'un spectre « pollué ».

La figure 8a représente la superposition du spectre mesuré 81 et de l'allure du spectre utile théorique attendu 82 dans le cas où le spectre mesuré n'est pas pollué par un spectre parasite. Dans ce cas les deux courbes sont semblables. Comme vu précédemment la fréquence centrale $f_{D0}$ correspond à la fréquence pour laquelle l'allure du spectre théorique est maximum.

La figure 8b correspond au cas où le spectre est pollué. L'allure de la densité spectrale théorique est placée de façon à faire coïncider le coté où la pente de la courbe de la densité spectrale mesurée est la plus raide.

Suite au choix de la fréquence centrale $f_{D0}$ et de l'étendue Doppler $\Delta f$, un filtrage de ces spectres est effectué dans chaque case distance par un filtre passe bande centré sur $f_{D0}$ et de largeur $\Delta f$.

Ainsi, contrairement à la méthode classique d'imagerie SAR, au lieu de conserver une bande de fréquence égale à la bande utile à -3dB, le procédé mis en oeuvre par l'invention conserve une bande de fréquence plus réduite égale à l'étendue spectrale $\Delta f$ calculée précédemment.

Pour chaque sous-éclairement, une imagette SAR 51 est réalisée selon des techniques connues de l'homme du métier, en utilisant le signal filtré au cour d'une étape Etp4.

Le traitement comprend une opération de conformité géométrique permettant de placer chaque imagette 51 dans une référence de cartographie terrestre. L'image SAR finale est ensuite formée par concaténation en juxtaposant les différente imagettes 51 formées.

Compte-tenu des contraintes sur le fractionnement des temps d'éclairement, il n'a aucun vide entre les différentes imagettes 51, l'image SAR finale peut donc être formée sans perte d'information.

Il se peut qu'il y ait des zones de recouvrement entre imagettes 51 consécutives. Dans le cas de recouvrement d'imagettes 51, on retrouve la problématique d'une imagerie à multi-vues. Selon des techniques connues de l'homme du métier, ce problème peut être résolu par exemple, en moyennant les valeurs des pixels de chaque point de l'image SAR finale recouvert par plusieurs imagettes 51.

De façon avantageuse, le mode d'imagerie SAR défilant tel que défini permet d'obtenir un meilleur contraste entre des zones de sol de faible et de forte réflectivité radar.

Le procédé suivant l'invention peut s'appliquer dans le cas de modes SAR de faible ou de moyenne résolution sur l'axe transverse utilisés typiquement pour identifier des zones sur le sol ou la mer de différentes réflectivités radar. Dans ces cas, il est possible d'utiliser un temps d'intégration cohérente inférieur au temps de présence d'un point M du sol à imager dans le lobe principal de l'antenne pendant l'avancement du porteur radar.

**Revendications**

1.  Procédé d'élimination d'échos parasites en imagerie SAR mis en oeuvre par au moins un porteur mobile **caractérisé en ce qu'**il comprend :

    - une étape Etp1 de définition des paramètres d'imagerie SAR à partir d'au moins la vitesse du porteur et la distance de la zone à imager par rapport au porteur,
    - une étape Etp2 de calcul du spectre du signal reçu, dans chaque case distance, d'une zone d'intérêt 50,
    - une étape Etp3 de filtrage des spectres dans chaque case distance réalisée par un filtre passe bande centré sur la fréquence centrale $f_{D0}$ des échos fixes rétrodiffusés par la zone d'intérêt 50, ladite fréquence centrale $f_{D0}$ étant obtenu par corrélation du spectre mesuré avec la forme théorique du spectre obtenue à partir des caractéristiques du diagramme de l'antenne radar,
- une étape Etp4 de formation d'imagette SAR 51 et
- une étape Etp5 de concaténation des imagettes SAR 51 pour former l'image SAR finale.

2. Procédé selon la revendication précédente **caractérisé en ce qu'**en cas de recouvrement de pixels lors de l'étape Etp5 de concaténation, cette dernière comprend une étape de moyennage de la valeur des pixels de chaque point de l'image SAR finale recouvert par plusieurs imagettes 51.

**Patentansprüche**

1. Verfahren zum Ausblenden von Störechos in SAR-Bildgebung, das mit einem mobilen Träger ausgeführt wird, **dadurch gekennzeichnet, dass** es Folgendes beinhaltet:

   - einen Schritt Etp1 des Definierens von SAR-Bildgebungsparametern auf der Basis von wenigstens der Geschwindigkeit des Trägers und der Distanz von der abzubildenden Zone in Bezug auf den Träger,
   - einen Schritt Etp2 des Berechnens des Spektrums des empfangenen Signals in jeder Distanzzelle einer Zone von Interesse 50,
   - einen Schritt Etp3 des Filterns von Spektren in jeder Distanzzelle, realisiert mit einem Bandpassfilter, das auf der Mittenfrequenz $f_{D0}$ von festen Echos zentriert ist, die von der Zone von Interesse 50 zurückgestreut werden, wobei die Mittenfrequenz $F_{D0}$ durch Korrelation des gemessenen Spektrums mit der theoretischen Form des Spektrums erhalten wird, erhalten auf der Basis von Charakteristiken des Radarantennendiagramms,
   - einen Schritt Etp4 des Bildens eines SAR-Teilbilds 51, und
   - einen Schritt Etp5 des Verkettens von SAR-Teilbildern 51 zum Bilden des endgültigen SAR-Bildes.

2. Verfahren nach dem vorherigen Anspruch, **dadurch gekennzeichnet, dass** im Falle einer Überlappung von Pixeln im Verkettungsschritt Etp5 Letzterer einen Schritt des Mittelns des Wertes der Pixel von jedem Punkt des endgültigen SAR-Bildes beinhaltet, das von mehreren Teilbildern 51 überlappt wird.

**Claims**

1. A method for eliminating spurious echoes in SAR imaging implemented by at least one moving carrier, **characterised in that** it comprises:

   - a step Etp1 of defining SAR imaging parameters on the basis of at least the speed of said carrier and the distance from the zone to be imaged in relation to said carrier;
   - a step Etp2 of computing the spectrum of the signal received, in each distance cell, from a zone of interest 50;
   - a step Etp3 of filtering spectra in each distance cell carried out by a bandpass filter centred on the central frequency $f_{D0}$ of the fixed echoes backscattered by said zone of interest 50, said central frequency $f_{D0}$ being obtained by correlating the measured spectrum with the theoretical shape of the spectrum obtained on the basis of the characteristics of the pattern of the radar antenna;
   - a step Etp4 of forming an SAR sub-image 51; and
   - a step Etp5 of concatenating SAR sub-images 51 so as to form the final SAR image.

2. The method according to the preceding claim, **characterised in that** in the event of pixels overlapping during said concatenating step Etp5, said step comprises a step of averaging the value of the pixels of each point of the final SAR image overlapped by a plurality of sub-images 51.

FIG.1

FIG.2

FIG.3

FIG.4a

FIG.4b

Az_A1b

10

Az_A1a

A7
A6
A5
A4
A3
A2
A1

50

51

12

Zone de sol imagée pendant l'éclairement quand l'avion est autour de la position A1

Zone de sol imagée pendant l'éclairement quand l'avion est autour de la position A7

## FIG.5

Δθ

Lv

M

## FIG.7

Données

Etp2

Paramètres
- Va
- D

Etp1

Définition des paramètres du traitement SAR :
- Ti
- Δθ
- Δf

Ti → Fenêtrage en récurrences : Ti = Nrec/Fr

Correction des migrations distance

Calcul du spectre dans chaque cellule distance

Moyenne des spectres sur $N_0$ cases distance

Analyse de la densité spectrale estimée

Δf

Filtrage des spectres dans chaque case distance

$Fd_0$

Formation de l'imagette SAR

Etp4

Géoréférencement / concaténation

Etp5

## FIG.6

FIG.8a

FIG.8b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P. FERRAZZOLI ; G. SCHIAVON.** Rain-induced modification of SAR performance. *Adv Space Res,* 1987, vol. 7 (11
- Principles and applications of imaging radars. Manual of Remote Sensing. vol. 2
- **HORSTMANN J et al.** Global wind speed retrieval from sar. *IEEE TRANSACTIONS ON GEOSCIENCE AND REMOTE SENSING,* 01 Octobre 2003, vol. 41 (10), 2277-2286